# EUROPEAN PATENT SPECIFICATION

(11) **EP 2 407 510 B1**
(45) Date of publication and mention of the grant of the patent: **21.12.2016**
(21) Application number: 10750687.5
(22) Date of filing: 25.02.2010
(51) Int. Cl.: C08L 27/06, C08K 3/24, C08K 5/3435, C08K 3/00, C08K 3/16, C08K 5/00, C08K 13/02, C08K 5/34

(54) **VINYL CHLORIDE RESIN COMPOSITION**
VINYLCHLORIDHARZZUSAMMENSETZUNG
COMPOSITION DE RÉSINE DE CHLORURE DE VINYLE

(30) Priority: 11.03.2009 JP 2009057618
(43) Date of publication of application: 18.01.2012
(73) Proprietor: Adeka Corporation, Tokyo 1160012 (JP)
(72) Inventor: KOBE Shinji, Saitama-shi Saitama 336-0022 (JP); IWANAMI Kiyotatsu, Saitama-shi Saitama 336-0022 (JP); MATSUZAKA Nobuo, Saitama-shi Saitama 336-0022 (JP)
(74) Representative: Gill Jennings & Every LLP
(86) International application number: PCT/JP2010/052961
(87) International publication number: WO 2010/103933

(56) References cited:
- EP-A2- 0 212 559
- WO-A1-2005/082852
- WO-A1-2005/082852
- WO-A1-2008/117575
- WO-A1-2009/107502
- WO-A1-2009/113389
- JP-A- 7 278 388
- JP-A- 62 039 652
- JP-A- 2007 269 911
- JP-A- 2008 179 680
- JP-A- 2009 167 416

## Description

### TECHNICAL FIELD

The present invention relates to a method of thermally processing a vinyl chloride-based resin composition.

Particularly, the present invention relates to a vinyl chloride-based resin composition having superior weatherability and heat aging resistance, in which a hindered amine compound having a specific carbonate skeleton and a perchlorate are used in combination.

### BACKGROUND ART

Vinyl chloride-based resins such as vinyl chloride resin have excellent flame retardancy and chemical resistance; therefore, they are used in a variety of applications such as building materials, agricultural and industrial equipment materials and automobile parts. However, vinyl chloride-based resins have a drawback in that they are thermally degraded to cause dehydrochlorination which results in reduction in the mechanical strength and occurrence of coloration, thereby impairing their marketability.

In order to solve the above-described drawback, a variety of stabilizers have been developed, and in particular, mixtures and the like of a lead or cadmium compound and a barium compound have been known to have superior stabilizing effect. However, in recent years, the trend is toward restricting the use of lead compounds and cadmium compounds from the safety standpoint, so that such stabilization by a lead or cadmium compound is now being replaced by stabilization provided by combinatory use of a highly safe zinc compound and an organic acid salt of alkaline earth metal or an inorganic compound such as hydrotalcite or zeolite.

Yet, since such low toxic stabilizers alone cannot provide sufficient stabilizing effect, in order to improve the resistance to light, heat, oxidation and the like, a variety of additives, such as organic phosphite compounds, epoxy compounds, phenolic antioxidants, benzophenone-based or benzotriazole-based UV absorbers and hindered amine-based light stabilizers, are used in combination.

Furthermore, in Patent Document 1, a low-basic hindered amine compound having a carbonate skeleton is proposed.

### RELATED ART DOCUMENT

### PATENT DOCUMENT

Patent Document 1: WO 2005/082852

### SUMMARY OF THE INVENTION

### PROBLEMS TO BE SOLVED BY THE INVENTION

However, there have been more demands for a vinyl chloride resin composition having high weatherability for use in automobile seats and the like. In addition, even when the hindered amine compound according to Patent Document 1 was individually added to a vinyl chloride-based resin, there was room for improvement.

Therefore, an object of the present invention is to provide a vinyl chloride-based resin composition having superior weatherability.

### MEANS FOR SOLVING THE PROBLEMS

In order to solve the aforementioned problems, the present inventors intensively studied to discover that the aforementioned object can be attained by using a hindered amine compound having a specific carbonate skeleton and a perchlorate in combination.

That is, the vinyl chloride resin composition used in the present invention comprises, with respect to 100 parts by mass of a vinyl chloride-based resin, (a) 0.001 to 10 parts by mass of at least one hindered amine compound and (b) 0.001 to 10 parts by mass of at least one selected from the group consisting of metal perchlorates, ammonium perchlorates, perchloric acid-treated hydrotalcites and perchloric acid-treated silicates, the hindered amine compound being represented by the following Formula (I): 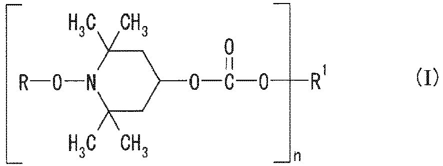 (wherein, R represents a C₁-C₃₀ alkyl group or hydroxyalkyl group, or a C₂-C₃₀ alkenyl group; n represents an integer of 1 to 6; when n = 1, R¹ represents a C₁-C₂₂ alkyl group, a C₂-C₂₂ alkenyl group or a group represented by the following Formula (III): 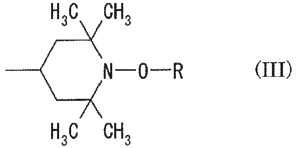 (wherein, R represents the same C₁-C₃₀ alkyl group or hydroxyalkyl group or C₂-C₃₀ alkenyl group as the aforementioned R); and when n = 2 to 6, R¹ represents a n-valent C₂-C₂₀ organic group) or by the following Formula (II): 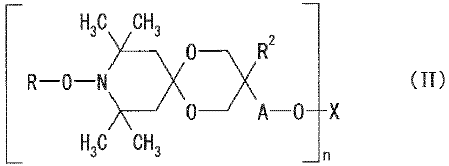 (wherein, R represents a C₁-C₃₀ alkyl group or hydroxyalkyl group, or a C₂-C₃₀ alkenyl group; R² represents a hydrogen atom, a C₁-C₂₂ alkyl group or a C₂-C₂₂ alkenyl group; A represents a single bond, a linear or branched C₁-C₁₂ alkylene group or an alkylene group having an ether bond; n represents an integer of 2 to 6; and X represents -C(=O)-, a linear or branched C₄-C₄₀ alkylene group having - C(=O)O- at terminal, a linear or branched C₄-C₄₀ alkylene group having -C(=O)O- at terminal, a linear or branched C₄-C₄₀ alkylene group having -C(=O)O- at terminal and an ether bond in an intermediate position, a linear or branched C₄-C₄₀ alkylene group having a carbonate bond or a C₆-C₃₀ organic group having -O-C(=O)- in the number of 3 to 6 at terminal).

In the vinyl chloride resin composition used in the present invention, it is preferred that R in the aforementioned Formula (I) be a C₄-C₂₂ alkyl group, n be 2, and R¹ be a C₂-C₁₂ alkylene group.

Further, in the vinyl chloride resin composition used inthe present invention, it is preferred that, in the aforementioned Formula (I), n be 1 and R¹ be a group represented by the aforementioned Formula (III) (wherein, R is a C₁₀-C₂₂ alkyl group).

Still further, the vinyl chloride resin composition according to the present invention is used in powder molding. It is also preferred that the vinyl chloride resin composition according to the present invention be used in an automobile seat.

### EFFECTS OF THE INVENTION

According to the present invention, a vinyl chloride-based resin composition which has superior weatherability and heat aging resistance and may be suitably used in automobile seats can be provided.

### MODE FOR CARRYING OUT THE INVENTION

The vinyl chloride-based resin composition used in the present invention (hereinafter, also referred to as "the composition") will now be explained in detail.

The polymerization method of the vinyl chloride-based resin used in the present invention is not particularly restricted and it is produced by bulk polymerization, solution polymerization, suspension polymerization, or emulsion polymerization Examples of the vinyl chloride-based resin used in the present invention include vinyl chloride-based resins such as polyvinyl chloride, chlorinated polyvinyl chloride, polyvinylidene chloride, chlorinated polyethylene, vinyl chloride-vinyl acetate copolymers, vinyl chloride-ethylene copolymers, vinyl chloride-propylene copolymers, vinyl chloride-styrene copolymers, vinyl chloride-isobutylene copolymers, vinyl chloride-vinylidene chloride copolymers, vinyl chloride-styrene-maleic anhydride ternary copolymers, vinyl chloride-styreneacrylonitrile copolymers, vinyl chloride-butadiene copolymers, vinyl chloride-isoprene copolymers, vinyl chloride-chlorinated propylene copolymers, vinyl chloride-vinylidene chloride-vinyl acetate ternary copolymers, vinyl chloride-maleic acid ester copolymers, vinyl chloride-methacrylic acid ester copolymers, vinyl chloride-acrylonitrile copolymers, copolymers of vinyl chloride and various vinyl ethers; blend products of these resins with each other; and blend products, block copolymers, graft copolymers and the like of these resins with other chlorine-free synthetic resins such as acrylonitrile-styrene copolymer, acrylonitrile-butadienestyrene copolymer, ethylene-vinyl acetate copolymer, ethylene-ethyl(meth)acrylate copolymer and polyester.

The hindered amine compound used as the component (a) in the present invention is a hindered amine compound having a carbonate skeleton, which is represented by the aforementioned Formula (I) or (II).

Examples of the C₁-C₃₀ alkyl group represented by R in the aforementioned Formulae (I) and (II) include linear or branched alkyl groups such as methyl, ethyl, propyl, isopropyl, butyl, isobutyl, sec-butyl, tert-butyl, pentyl, sec-pentyl, tert-pentyl, hexyl, heptyl, octyl, isooctyl, 2-ethylhexyl, tert-octyl, nonyl, isononyl, decyl, undecyl, dodecyl, tridecyl, tetradecyl, pentadecyl, hexadecyl, heptadecyl and octadecyl; and cycloalkyl groups such as cyclohexyl group.

Examples of the C₁-C₃₀ hydroxyalkyl group represented by R in the aforementioned Formulae (I) and (II) include 2-hydroxyethyl, 2-hydroxypropyl, 2-hydroxybutyl and 2-hydroxy-2-methylpropyl.

The aforementioned R may be the same or different for every units in the number of n.

Examples of the C₂-C₃₀ alkenyl group represented by R in the aforementioned Formulae (I) and (II) include those alkenyl groups corresponding to the aforementioned alkyl groups, such as vinyl, allyl, butenyl, pentenyl and oleyl.

In the aforementioned Formula (I), when n = 1, R¹ represents a C₁-C₂₂ alkyl group, a C₂-C₂₂ alkenyl group or a group represented by the aforementioned Formula (III).

Examples of the C₁-C₂₂ alkyl group which is represented by R¹ when n = 1 in the aforementioned Formula (I) include methyl, ethyl, propyl, isopropyl, butyl, isobutyl, sec-butyl, tert-butyl, pentyl, sec-pentyl, tert-pentyl, hexyl, heptyl, octyl, isooctyl, 2-ethylhexyl, tert-octyl, nonyl, isononyl, decyl, undecyl, dodecyl, tridecyl, tetradecyl, pentadecyl, hexadecyl, heptadecyl, octadecyl and behenyl.

Examples of the C₂-C₂₂ alkenyl group which is represented by R¹ when n = 1 in the aforementioned Formula (I) include those alkenyl groups corresponding to the aforementioned alkyl groups, such as vinyl, allyl, butenyl, pentenyl and oleyl.

In cases where, in the aforementioned Formula (I), n = 1 and R¹ represents a group represented by the aforementioned Formula (III), examples of the R in the Formula (III) include the same compounds as those exemplified for the R in the Formula (I); however, the R in the Formula (III) may be the same as or different from the R in the Formula (I). It is preferred that R be a C₁₀-C₂₂ alkyl group.

Examples of the n-valent C₂-C₂₀ organic group which is represented by R¹ when n = 2 to 6 in the aforementioned Formula (I) include, in addition to alkylene groups and the like, residues obtained by removing hydroxy group of a n-valent polyhydroxy compound.

Examples of the aforementioned polyhydroxy compound include ethylene glycol, propylene glycol, 1,3-propanediol, 1,2-butanediol, 1,3-butanediol, 1,4-butanediol, neopentyl glycol, 1,6-hexanediol, 1,3-cyclohexanediol, 1,4-cyclohexanediol, hydrogenated product of bisphenol A, hydrogenated product of bisphenol F, diethylene glycol, triethylene glycol, glycerine, trimethylolpropane, pentaerythritol and dipentaerythritol.

In the aforementioned Formula (II), R² represents a hydrogen atom, a C₁-C₂₂ alkyl group or a C₂-C₂₂ alkenyl group.

Examples of the C₁-C₂₂ alkyl group represented by the aforementioned R² include, among those alkyl groups exemplified for the aforementioned R, those having the defined number of carbon atoms.

Examples of the C₂-C₂₂ alkenyl group represented by R² in the aforementioned Formula (II) include, among those alkenyl groups exemplified for the aforementioned R, those having the defined number of carbon atoms. Further, the aforementioned R² may be the same or different for every units in the number of n.

In the aforementioned Formula (II), A represents a single bond, a linear or branched C₁-C₁₂ alkylene group or an alkylene group having an ether bond.

Examples of the aforementioned alkylene group include methylene, 1,2-ethylene, 1,2-propylene, 1,3-propylene, tetramethylene, 1,2-butylene, 1,3-butylene, pentamethylene, 2,2-dimethyl trimethylene, hexamethylene and octamethylene.

Examples of the linear or branched C₁-C₁₂ alkylene group having an ether bond, which is represented by A in the aforementioned Formula (II), include:

-CH₂CH₂-O-CH₂CH₂- ;

-CH₂CH(CH₃)-O-CH₂CH(CH₃)-;

and

-CH₂CH₂-O-CH₂CH₂-O-CH₂CH₂- .

The aforementioned A may be the same or different for every units in the number of n (n is 2 to 6).

In the aforementioned Formula (II), X represents -C(=O)-, a linear or branched C₄-C₄₀ alkylene group having -C(=O)O- at terminal, a linear or branched C₄-C₄₀ alkylene group having -C(=O)O- at terminal and an ether bond in an intermediate position, a linear or branched C₄-C₄₀ alkylene group having a carbonate bond, or a C₆-C₃₀ organic group having -O-C(=O)- in the number of 3 to 6 at terminal.

Examples of the C₄-C₄₀ alkylene group having a -C(=O)O- bond at terminal, which is represented by X in the aforementioned Formula (II), include:

-C(=O)-O-(CH₂)ₚ-O-C(=O)-

(wherein, p is a number of 2 to 40).

Examples of the alkylene group having a carbonate bond, which is represented by X in the aforementioned Formula (II), include:

-C(=O)-R³-O-C(=O)-O-R³-C(=O)-

(wherein, R³ represents a C₂-C₁₈ alkylene group).

Further, examples of the organic group having -O-C(=O)- in the number of 3 to 6 at terminal, which is represented by X in the aforementioned Formula (II) include the following groups:

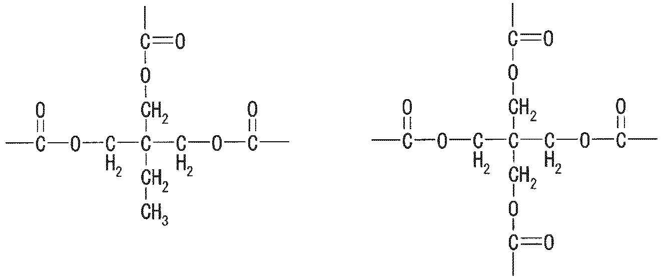

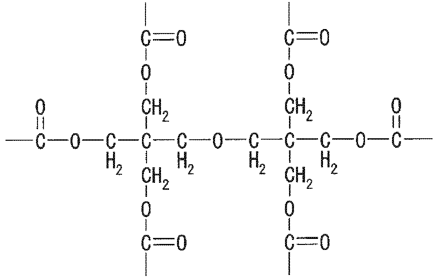

More particularly, examples of the compound represented by the aforementioned Formula (I) include the following Compound Nos. 1 to 6 and Compound No. 13, and examples of the compound represented by the aforementioned Formula (II) include the following Compound Nos. 7 to 12. However, the present invention is not restricted by the following compounds by any means.

### Compound No. 1

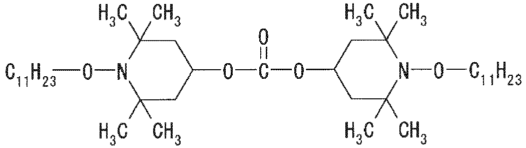

### Compound No. 2

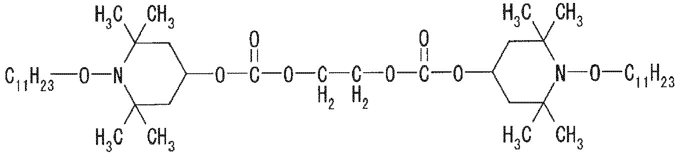

### Compound No. 3

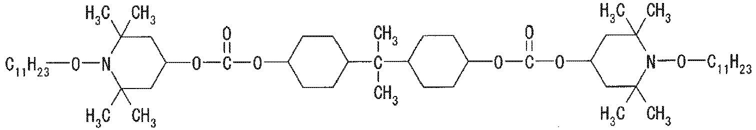

### Compound No. 4

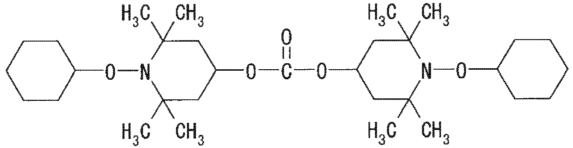

### Compound No. 5

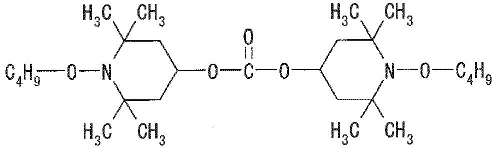

### Compound No. 6

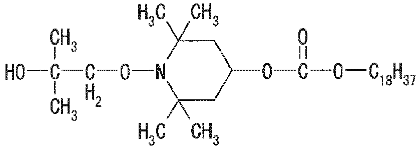

### Compound No. 7

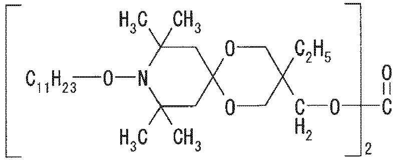

### Compound No. 8

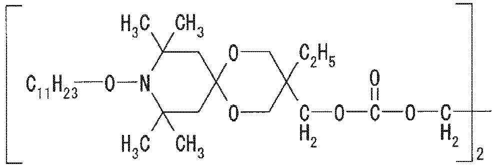

### Compound No. 9

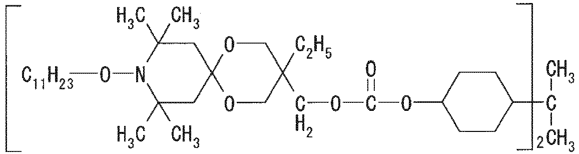

### Compound No. 10

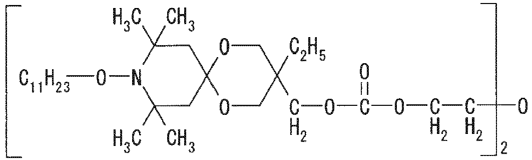

### Compound No. 11

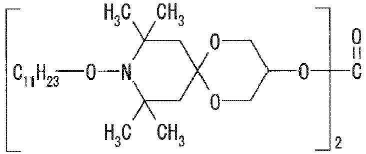

### Compound No. 12

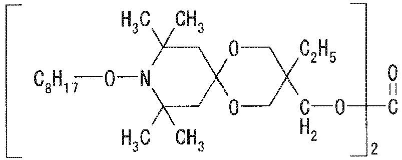

### Compound No. 13

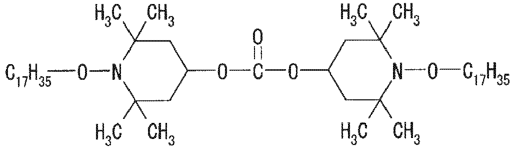

The content of the aforementioned component (a) is 0.001 to 10 parts by mass, preferably 0.01 to 5 parts by mass, with respect to 100 parts by mass of the vinyl chloride-based resin. When the component (a) is used in an amount of less than 0.001 parts by mass, the effect of the addition thereof may not be sufficiently exhibited, and an amount of greater than 10 parts by mass may cause considerable coloration; therefore, such amounts are not preferred.

The component (b) used in the present invention is at least one selected from the group consisting of metal perchlorates, ammonium perchlorates, perchloric acid-treated hydrotalcites and perchloric acid-treated silicates.

Examples of metals constituting the aforementioned metal perchlorates include lithium, sodium, potassium, calcium, magnesium, strontium, barium, zinc, cadmium, lead and aluminum. The aforementioned metal perchlorates may be an anhydride or a hydrate salt. In addition, the aforementioned metal perchlorates may also be dissolved in an alcohol-based or ester-based solvent such as butyl diglycol or butyl diglycol adipate, or may be a dehydrate thereof.

Further, the aforementioned ammonium perchlorates may also be an anhydride or a hydrate salt.

Furthermore, the aforementioned perchloric acid-treated hydrotalcites are a perchloric acid-modified product in which a part or the entirety of carbonic acid of a hydrotalcite compound is substituted with perchloric acid.

The aforementioned hydrotalcite compounds are a carbonic acid double salt compound of magnesium and/or zinc and aluminum, preferably a compound represented by the Formula (IV) below:

Mgₓ₁Znₓ₂Al₂(OH)₂₍ₓ₁₊ₓ₂₎₊₄·CO₃·mH₂O (IV)

(wherein, x1 and x2 each represents a number satisfying the conditions shown by the following equations and m represents a real number: 0 ≤ x2/x1 < 10, 2 ≤ x1 + x2 < 20).

The aforementioned hydrotalcite compounds may be either a naturally-occurring one or a synthetic product. Examples of the method of synthesizing the aforementioned synthetic product include those known methods described in, for example, JP 46-2280B, JP 50-30039B, JP 51-29129B and Japanese Unexamined Patent Application Publication No. S61-174270. Further, in the present invention, the aforementioned hydrotalcite compounds can be used without any restriction on the presence or absence of crystal structure, crystal grain system or crystal water, and the amount thereof.

Further, the aforementioned perchloric acid-treated hydrotalcites may be used upon coating its surface with a higher fatty acid such as stearic acid, a higher fatty acid metal salt such as alkali metal oleate, an organic sulfonic acid metal salt such as alkali metal dodecylbenzene sulfonate, a higher fatty acid amide, a higher fatty acid ester, or a wax.

The aforementioned perchloric acid-treated hydrotalcites can be easily produced, for example, by adding hydrotalcite to a dilute aqueous solution of perchloric acid and stirring the thus obtained mixture, and subsequently, as required, filtering, dehydrating or drying the resultant. In this case, the molar ratio of the aforementioned hydrotalcite and the aforementioned perchloric acid is arbitrarily selected; however, in general, it is preferred that perchloric acid be used in an amount of 0.1 to 2 moles with respect to 1 mole of the hydrotalcite.

Examples of the aforementioned perchloric acid-treated silicates include metal silicates such as calcium silicate, magnesium silicate, barium silicate and zinc silicate and a variety of siliceous clay minerals, as well as treated products thereof, for example, those obtained by treating natural or synthetic silicate with perchloric acid solution, such as kaolin, bentonite, mica powder, talc, diatomaceous earth, acidic clay, activated clay and zeolite. Among these perchloric acid-treated silicates, treated products of calcium silicate, magnesium silicate, barium silicate, kaolin, bentonite, talc, acidic clay, activated clay and zeolite are preferred.

The aforementioned perchloric acid-treated silicates can be easily produced, for example, by adding silicate to a dilute aqueous solution of perchloric acid and stirring the thus obtained mixture, and subsequently, as required, filtering, dehydrating or drying the resultant. The molar ratio of the aforementioned silicate and perchloric acid is arbitrarily selected; however, in general, it is preferred that perchloric acid be used in an amount of 0.1 to 2 moles with respect to 1 mole of the silicate.

The content of the aforementioned component (b) is 0.001 to 10 parts by mass, preferably 0.01 to 5 parts by mass, more preferably 0.05 to 3 parts by mass, with respect to 100 parts by mass of the vinyl chloride-based resin. When the aforementioned content is less than 0.001 parts by mass, there is hardly any effect of the component (b), and a content of greater than 10 parts by mass does not provide any effect, but rather may even have an adverse impact on the heat resistance and colorability.

In the vinyl chloride-based resin composition used in the present invention, a plasticizer generally used in vinyl chloride-based resins may be added, and examples thereof include phthalate-based plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephthalate; adipate-based plasticizers such as dioctyl adipate, diisononyl adipate, diisodecyl adipate and di(butyl diglycol)adipate; phosphate-based plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; polyester-based plasticizers using ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, neopentyl glycol or the like as polyalcohol, and oxalic acid, malonic acid, succinic acid, glutaric acid, adipic acid, pimelic acid, suberic acid, azelaic acid, sebacic acid, phthalic acid, isophthalic acid, terephthalic acid or the like as dibasic acid, in which polyester-based plasticizers a monohydric alcohol or monocarboxylic acid is used as a stopper, as required; and other plasticizers such as trimellitic acid-based plasticizers, pyromellitic acid-based plasticizers, tetrahydrophthalic acid-based plasticizers, azelaic acid-based plasticizers, sebacic acid-based plasticizers, stearic acid-based plasticizers, citric acid-based plasticizers, biphenyl tetracarboxylic acid ester-based plasticizers and chlorine-based plasticizers.

The content of the aforementioned plasticizer is determined as required; however, usually, the plasticizer is used in an amount of 0 to 200 parts by mass, particularly 10 to 80 parts by mass, with respect to 100 parts by mass of the vinyl chloride-based resin.

Further, in the composition used in the present invention, other additive(s) generally used in vinyl chloride-based resin compositions may be added, and examples of such additives include metal salts of organic carboxylic acids, phenols and organophosphates; zeolite compounds; hydrotalcite compounds; β-diketone compounds; epoxy compounds; polyalcohols; phenol-based, phosphorus-based and sulfur-based antioxidants; UV absorbers, hindered amine-based light stabilizers; and other inorganic metal compounds.

Examples of metals constituting the aforementioned metal salts of organic carboxylic acids, phenols and organophosphates include lithium, potassium, sodium, calcium, magnesium, barium, aluminum and zinc.

Examples of the aforementioned organic carboxylic acids include monocarboxylic acids such as acetic acid, propionic acid, butyric acid, valeric acid, caproic acid, enanthic acid, caprylic acid, pelargonic acid, 2-ethylhexanoic acid, neodecanoic acid, capric acid, undecanoic acid, lauric acid, tridecanoic acid, myristic acid, palmitic acid, isostearic acid, stearic acid, 12-hydroxystearic acid, behenic acid, montanoic acid, benzoic acid, monochlorobenzoic acid, p-tert-butyl benzoic acid, dimethylhydroxy benzoic acid, 3,5-di-tert-butyl-4-hydroxy benzoic acid, toluic acid, dimethyl benzoic acid, ethyl benzoic acid, cuminic acid, n-propyl benzoic acid, aminobenzoic acid, N,N-dimethylamino benzoic acid, acetoxy benzoic acid, salicylic acid, p-tert-octyl salicylic acid, elaidic acid, oleic acid, linoleic acid, linolenic acid, thioglycolic acid, mercaptopropionic acid and octyl mercaptopropionic acid; dicarboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxy phthalic acid, chlorophthalic acid, amino phthalic acid, maleic acid, fumaric acid, citraconic acid, methaconic acid, itaconic acid, aconitic acid and thiodipropionic acid, or monoester or monoamide compounds of these dicarboxylic acids; and tri- or tetra-carboxylic acids such as butane tricarboxylic acid, butane tetracarboxylic acid, hemimellitic acid, trimellitic acid, mellophanic acid and pyromellitic acid, or di- or tri-ester compounds of these tri- or tetra-carboxylic acids.

Further, examples of the aforementioned phenols include tert-butylphenol, nonylphenol, dinonyl phenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tert-nonylphenol, decylphenol, tert-octylphenol, isohexylphenol, octadecylphenol, diisobutylphenol, methyl propyl phenol, diamylphenol, methyl isohexyl phenol and methyl-tert-octyl phenol.

Further, examples of the aforementioned organophosphates include mono- or di-octyl phosphate, mono- or di-dodecyl phosphate, mono- or di-octadecyl phosphate, mono- or di-(nonylphenyl)phosphate, nonylphenyl phosphonate, stearyl phosphonate, mono- or di-octyl phosphite and mono- or di-octadecyl phosphite.

Further, the aforementioned metal salts of organic carboxylic acids, phenols and organophosphates may also be an acidic salt, neutral salt, basic salt or perbasic complex which is obtained by partially or entirely neutralizing the base of a basic salt with carbonic acid.

The aforementioned zeolite compounds is an aluminosilicate of alkali or alkaline earth metal which has a unique three-dimensional zeolite crystal structure, and representative examples thereof include A-type, X-type, Y-type and P-type zeolites, monodenite, analcite, sodalite-family aluminosilicates, clinoptilolite, erionite and chabazite. These zeolite compounds may be either a hydrate having crystal water (so-called zeolite water) or an anhydride in which the crystal water is removed. Further, zeolites having a particle diameter of 0.1 to 50 μm may be used and those having a particle diameter of 0.5 to 10 μm are particularly preferred.

The aforementioned hydrotalcite compound is a carbonic acid double salt compound of magnesium and/or zinc and aluminum, which is already described in detail in the paragraphs relating to the perchloric acid-treated hydrotalcites. Preferably, the aforementioned hydrotalcite compound is a compound represented by the aforementioned Formula (IV).

Further, the aforementioned hydrotalcite compound may also be used upon coating its surface with a higher fatty acid such as stearic acid, a higher fatty acid metal salt such as alkali metal oleate, an organic sulfonic acid metal salt such as alkali metal dodecylbenzene sulfonate, a higher fatty acid amide, a higher fatty acid ester, or a wax,

Examples of the aforementioned β-diketone compounds include dehydroacetic acid, dibenzoylmethane, palmitoylbenzoylmethane and stearoylbenzoylmethane, and metal salts of these compounds are also equally useful.

Examples of the aforementioned epoxy compounds include bisphenol-type and novolak-type epoxy resins, epoxidized soybean oil, epoxidized linseed oil, epoxidized tung oil, epoxidized fish oil, epoxidized beef tallow oil, epoxidized castor oil, epoxidized safflower oil, epoxidized tall oil fatty acid octyl, epoxidized linseed oil fatty acid butyl, methyl epoxystearate, butyl epoxystearate, 2-ethylhexyl epoxy stearate, stearyl epoxystearate, tris(epoxypropyl)isocyanurate, 3-(2-xenoxy)-1,2-epoxypropane, epoxidized polybutadiene, bisphenol-A diglycidyl ether, vinylcyclohexene diepoxide, dicyclopentadiene diepoxide, 3,4-epoxycyclohexyl-6-methylepoxycyclohexane carboxylate and bis(3,4-epoxycyclohexyl)adipate.

Examples of the aforementioned polyalcohols include pentaerythritol, dipentaerythritol, sorbitol, mannitol, trimethylolpropane, ditrimethylolpropane, stearic acid partial ester of pentaerythritol or dipentaerythritol, bis(dipentaerythritol)adipate, glycerin, diglycerin, and tris(2-hydroxyethyl)isocyanurate.

Examples of the aforementioned phosphorous-based antioxidant include triphenyl phosphite, tris(2,4-di-tert-butylphenyl)phosphite, tris(nonylphenyl)phosphite, tris(dinonylphenyl)phosphite, tris(mono-, di-mixed nonylphenyl)phosphite, bi s(2-tert-butyl-4,6-dimethylphenyl)·ethyl phosphite, diphenyl acid phosphite, 2,2'-methylenebis(4,6-di-tert-butylphenyl)octyl phosphite, diphenyldecyl phosphite, phenyldiisodecyl phosphite, tributyl phosphite, tris(2-ethylhexyl)phosphite, tridecyl phosphite, trilauryl phosphite, dibutyl acid phosphite, dilauryl acid phosphite, trilauryl trithiophosphite, bis(neopentyl glycol)·1,4-cyclohexane dimethyl diphosphite, bis(2,4-di-tert-butylphenyl)pentaerythritol diphosphite, bis(2,6-di-tert-butyl-4-methylphenyl)pentaerythritol diphosphite, distearyl pentaerythritol diphosphite, tetra(C12-15 mixed alkyl)-4,4'-isopropylidene diphenylphosphite, bis[2,2'-methylenebis(4,6-diamylphenyl)]·isopropylidene diphenylphosphite, hydrogenated-4,4'-isopropylidene diphenol polyphosphite, tetra(tridecyl)·4,4'-butylidenebis(2-tert-butyl-5-methylphenol)diphosphite, hexa(tridecyl)·1,1,3-tris(2-methyl-5-tert-butyl-4-hydroxyphenyl)butane·triphosphonite, 9,10-dihydro-9-oxa-10-phosphaphenanthrene-10-oxide and 2-butyl-2-ethylpropanediol-2,4,6-tri-tert-butylphenol monophosphite.

Examples of the aforementioned phenolic antioxidant include 2,6-di-tert-butyl-p-cresol, 2,6-diphenyl-4-octadecyloxyphenol, stearyl(3,5-di-tert-butyl-4-hydroxyphenyl)-propionate, distearyl(3,5-di-tert-butyl-4-hydroxybenzyl)phosphonate, thiodiethylene glycol-bis[(3,5-di-tert-butyl-4-hydroxyphenyl)propionate], 1,6-hexamethylenebis[(3,5-di-tert-butyl-4-hydroxyphenyl)propionate], 1,6-hexamethylenebis[(3,5-di-tert-butyl-4-hydroxyphenyl)propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butylic acid]glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3,5-di-tert-butyl-4-hydroxyphenyl)propionate]methane, 2-tert-butyl-4-methyl-6-(2-acryloyloxy-3-tert-butyl-5-methylbenzyl)phenol, 3,9-bis[1,1-dimethyl-2-{(3-tert-butyl-4-hydroxy-5-methylphenyl)propionyloxy}ethyl]-2,4,8,10-tetraoxaspiro[5.5]undecane and triethylene glycol-bis[(3-tert-butyl-4-hydroxy-5-methylphenyl)propionate].

Examples of the aforementioned sulfur-based antioxidants include dialkyl thiodipropionates such as dilauryl, dimyristyl and distearyl thiodipropionates; and β-alkylmercapto propionic acid esters of polyols such as pentaerythritol tetra(β-dodecylmercaptopropionate).

Examples of the aforementioned UV absorbers include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole and 2,2'-methylenebis(4-tert-octyl-6-benzotriazolyl)phenol; benzoates such as phenyl salicylate, resorcinol monobenzoate, 2,4-di-tert-butylphenyl-3',5'-di-tert-butyl-4'-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; and cyanoacrylates such as ethyl-α-cyano-β,β-diphenyl acrylate and methyl-2-cyano-3-methyl-3-(p-methoxyphenyl)acrylate.

Examples of the aforementioned hindered amine-based light stabilizers include 2,2,6,6-tetramethyl-4-piperidyl stearate, 1,2,2,6,6-pentamethyl-4-piperidyl stearate, 2,2,6,6-tetramethyl-4-piperidylbenzoate, N-(2,2,6,6-tetramethyl-4-piperidyl)dodecyl succinimide, 1-[(3,5-di-tert-butyl-4-hydroxyphenyl)propionyloxyethyl]-2,2,6,6-tetramethyl-4-piperidyl-(3,5-di-tert-butyl-4-hydroxyphenyl)propionate, bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-butyl-2-(3,5-di-tert-butyl-4-hydroxybenzyl)malonate, N,N'-bis(2,2,6,6-tetramethyl-4-piperidyl)hexamethylenediamine, tetra(2,2,6,6-tetramethyl-4-piperidyl)butane tetracarboxylate, tetra(1,2,2,6,6-pentamethyl-4-piperidyl)butane tetracarboxylate, bis(2,2,6,6-tetramethyl-4-piperidyl)·di(tridecyl)butane tetracarboxylate, bis(1,2,2,6,6-pentamethyl-4-piperidyl)·di(tridecyl)butane tetracarboxylate, 3,9-bis[1,1-dimethyl-2-{tris(2,2,6,6-tetramethyl-4-piperidyloxycarbonyloxy)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyloxy)butylcarbonyloxy}ethyl]-2,4,8,10-tetraoxaspiro[5.5]undecane, 1,5,8,12-tetrakis[4,6-bisfN-(2,2,6,6-tetramethyl-4-piperidyl)butylamino}-1,3,5-triazine-2-yl]-1,5,8,12-tetraazadodecane, 1-(2-hydroxyethyl)-2,2,6,6-tetramethyl-4-piperidinol/dimethyl succinate condensate, 2-tert-octylamino-4,6-dichloro-s-triazine/N,N'-bis(2,2,6,6-tetramethyl-4-piperidyl)hexamethylenediamine condensate and N,N'-bis(2,2,6,6-tetramethyl-4-piperidyl)hexamethylenediamine/dibromoethane condensate.

Examples of the aforementioned inorganic metal compounds include inorganic acid salts (e.g. oxides, hydroxides, halides, perchlorates, carbonates, sulfates, nitrates, silicates and phosphates) of those metal species exemplified as the metals constituting the aforementioned metal salts of organic carboxylic acids and basic salts thereof.

Further, in the composition according to the present invention, for example, a filler(s) such as calcium carbonate, silica, clay, glass beads, mica, sericite, glass flakes, asbestos, wollastonite, potassium titanate, PMF, gypsum fibers, xonotlite, MOS, phosphate fibers, glass fibers, carbon fibers and aramid fibers; and/or a pigment(s) such as titanium oxide, red iron oxide, chrome yellow, ultramarine, carbon black, azo-based pigments, phthalocyanine-based pigments, quinacridone-based pigments and dioxazine pigments may be used.

In addition, in the composition according to the present invention, an impact resistance-improving agent, cross-linking agent, foaming agent, antistatic agent, anti-clouding agent, anti-plateout agent, surface treatment agent, lubricant, flame retardant, fluorescent agent, antifungal agent, sterilizer, metal inactivator, mold release agent and/or processing aid may be blended as required.

The composition according to the present invention can be used in building materials such as wall materials, floor materials, window frames, corrugated panels and rain gutters; automotive interior and exterior materials; fish and food packaging materials such as trays; and miscellaneous goods such as packings, gaskets, hoses, pipes, joints, sheets and toys. Particularly, the composition according to the present invention can be suitably used in automobile seats.

### EXAMPLES

The vinyl chloride-based resin composition according to the present invention will now be described in more detail by way of examples; however, the present invention is not limited thereto.

### Reference Example 1

The following composition was blended by a Henschel mixer and the resultant was then roll-kneaded under a condition of 190°C × 30 rpm × 0.6 mm ×5 minutes to prepare a sheet. The weatherability test described below was carried out on the thus obtained sheet. The results thereof are shown in Table 1 below.

| (Formulation) | (Parts by mass) |
|---|---|
| Vinyl chloride resin | 100 |
| Pyromellitic acid tetra (C9-11 mixed alkyl ester) | 72 |
| Tricresyl phosphate | 10 |
| Epoxidized soybean oil | 3 |
| Barium-zinc based liquid stabilizer | 2.5 |
| Tetra(C12-15 mixed alkyl)-4,4'-isopropylidene diphenylphosphite | 0.8 |
| Test compound (see Table 1) | (see Table 1) |

Weatherability test: The thus obtained sheet was placed in a Metal Weather weatherability tester (60 mW/cm², no shower; temperature: 63°C; humidity: 30% RH) and the yellowness of the sheet was measured after 60 hours.

Heat aging resistance test: In accordance with JIS K7113, a test piece defined therein was prepared from the thus obtained sheet and it was subjected to tensile test to measure elongation (%). In addition, after lining the thus obtained sheet with urethane and promoting aging of the resultant at 120°C for 500 hours, the urethane lining was removed and a test piece was prepared, which was subjected to tensile test to measure elongation (%). From the result thereof, retained elongation (elongation of the test piece after aging / elongation of the test piece before aging × 100, %) was determined.

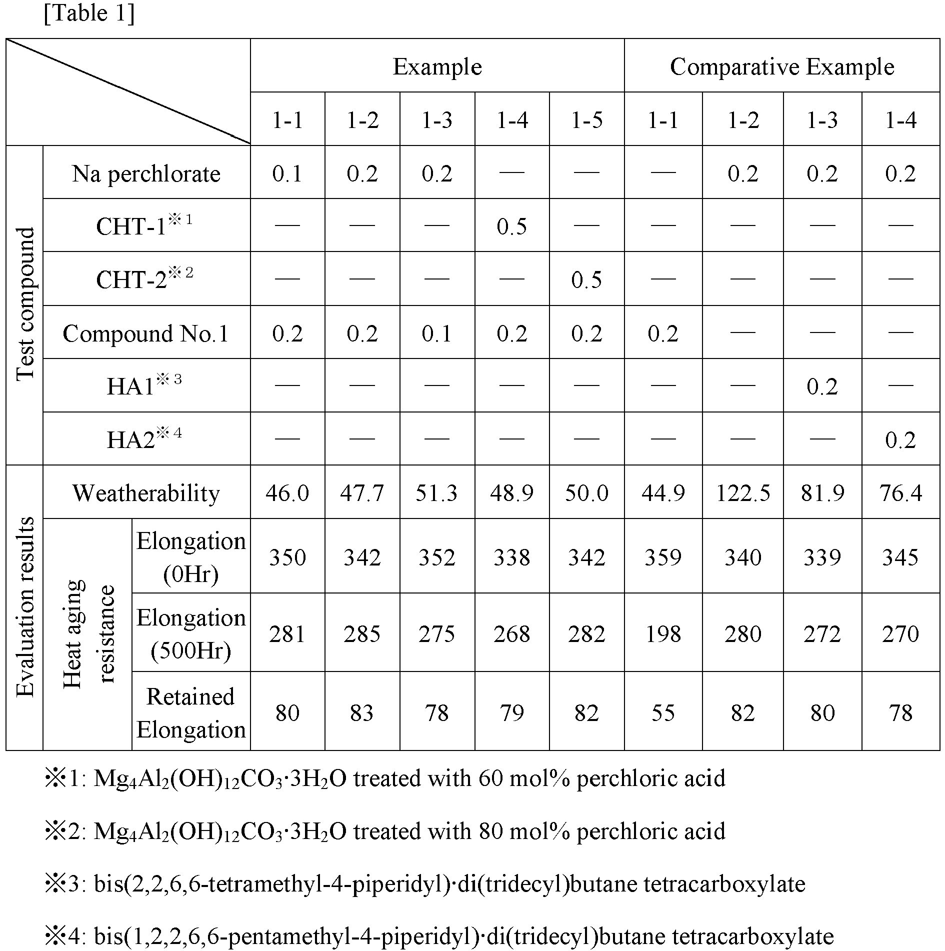

### Example 2

After subjecting a vinyl chloride-based resin composition having the following formulation to 130°C × 2 hour dry-up in a Geer oven at 130°C, the resultant was stirred for 15 minutes using a raikai mixer to prepare a compound. A chromium mirror plate was placed in a 300°C-Geer oven and taken out after about 15 minutes. Thereafter, at the time point where the temperature of the mirror plate became 240°C, the compound was promptly spread in a uniform thickness and left to stand for 10 seconds. After inverting the die and leaving it to stand as it was for 30 seconds, the die was immersed in a water bath and cooled to prepare a sheet.

| (Formulation) | (Parts by mass) |
|---|---|
| Suspension-polymerized vinyl chloride resin | 90 |
| Vinyl chloride resin paste | 10 |
| Trimellitic acid triester | 80 |
| Epoxidized soybean oil | 3 |
| 12-hydroxystearate oligomer | 0.2 |
| Ivory pigment | 5 |
| Magnesium-zinc based powder stabilizer | 2.8 |
| Tetra(C12-15 mixed alkyl)-4,4'-isopropylidene diphenylphosphite | 0.5 |
| Test compound (see Table 2) | (see Table 2) |

Weatherability test: The thus obtained sheet was placed in an 83°C fade meter to measure the time required for discoloration. The results thereof are shown in Table 2 below.

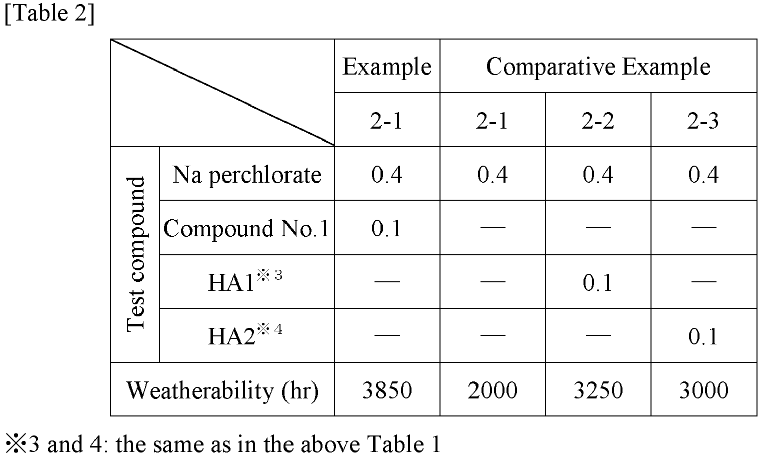

As clearly seen from the aforementioned Examples, in the case where a hindered amine compound having a specific carbonate skeleton was used alone (Comparative Example 1-1), the heat aging resistance properties were inferior and in those cases where a perchlorate was used alone (Comparative Examples 1-2 and 2-1), the weatherability was inferior. Even in those cases where a hindered amine compound and a perchlorate were used in combination, when a compound which is different from the hindered amine compound according to the present invention having a specific carbonate skeleton according to the present invention was used in combination (Comparative Examples 1-3, 1-4, 2-2 and 2-3), the weatherability-improving effect was small.

In contrast, in those cases where the hindered amine compound having a specific carbonate skeleton and a perchlorate were used in combination Reference (Examples 1-1 to 1-5 and Example 2-1), a resin composition which has superior heat aging resistance properties and markedly improved weatherability was obtained.

## Claims

1. A method of thermally processing a vinyl chloride-based resin composition by powder molding, wherein the vinyl chloride-based resin composition comprises, with respect to 100 parts by mass of a vinyl chloride-based resin, (a) 0.001 to 10 parts by mass of at least one hindered amine compound and (b) 0.001 to 10 parts by mass of at least one selected from the group consisting of metal perchlorates, ammonium perchlorates, perchloric acid-treated hydrotalcites and perchloric acid-treated silicates, said hindered amine compound being represented by the following Formula (I): 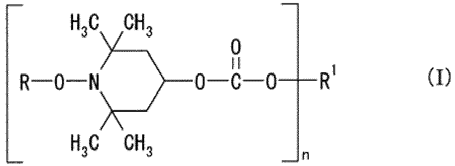 (wherein, R represents a C₁-C₃₀ alkyl group or hydroxyalkyl group, or a C₂-C₃₀ alkenyl group; n represents an integer of 1 to 6; when n = 1, R¹ represents a C₁-C₂₂ alkyl group, a C₂-C₂₂ alkenyl group or a group represented by the following Formula (III): 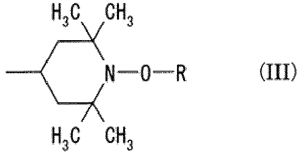 (wherein, R represents the same C₁-C₃₀ alkyl group or hydroxyalkyl group or C₂-C₃₀ alkenyl group as said R); and when n = 2 to 6, R¹ represents a n-valent C₂-C₂₀ organic group)
or by the following Formula (II): 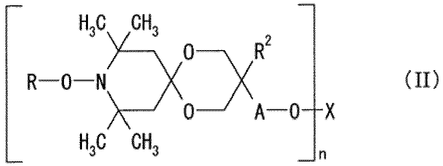 (wherein, R represents a C₁-C₃₀ alkyl group or hydroxyalkyl group, or a C₂-C₃₀ alkenyl group; R² represents a hydrogen atom, a C₁-C₂₂ alkyl group or a C₂-C₂₂ alkenyl group; A represents a single bond, a linear or branched C₁-C₁₂ alkylene group or an alkylene group having an ether bond; n represents an integer of 2 to 6; and X represents -C(=O)-, a linear or branched C₄-C₄₀ alkylene group having - C(=O)O- at terminal, a linear or branched C₄-C₄₀ alkylene group having -C(=O)O- at terminal and an ether bond in an intermediate position, a linear or branched C₄-C₄₀ alkylene group having a carbonate bond or a C₆-C₃₀ organic group having -O-C(=O)-in the number of 3 to 6 at terminal).

2. The method according to claim 1, wherein, in said Formula (I), R is a C₄-C₂₂ alkyl group, n is 2, and R¹ is a C₂-C₁₂ alkylene group.

3. The method according to any previous claim, wherein, in said Formula (I), n is 1 and R¹ is a group represented by said Formula (III) (wherein, R is a C₁₀-C₂₂ alkyl group).

4. The method according to any previous claim, wherein the composition further comprises metal salts of organic carboxylic acids, phenols and organic phosphates, zeolite compounds, hydro talcite compounds, β-diketone compounds, epoxy compounds, poly alcohols, phenyl based, phosphorus based and sulphur based antioxidents, ultra violet absorbers, hindered amine based light stabilizers and/or other inorganic metal compounds.

5. The method according to any previous claim, wherein the composition is molded into an article for use in an automobile seat.

6. The use of at least one hindered amine compound and at least one selected from the group consisting of metal perchlorates, ammonium perchlorates, perchloric acid-treated hydrotalcites and perchloric acid-treated silicates, in a vinyl chloride resin composition, in a powder molding process to improve thermal stability, colorability and processability, wherein said hindered amine compound being represented by the following Formula (I): 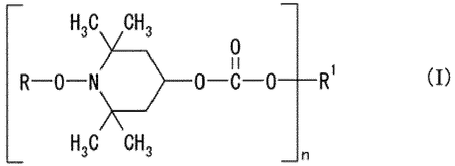 (wherein, R represents a C₁-C₃₀ alkyl group or hydroxyalkyl group, or a C₂-C₃₀ alkenyl group; n represents an integer of 1 to 6; when n = 1, R¹ represents a C₁-C₂₂ alkyl group, a C₂-C₂₂ alkenyl group or a group represented by the following Formula (III): 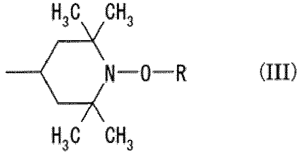 (wherein, R represents the same C₁-C₃₀ alkyl group or hydroxyalkyl group or C₂-C₃₀ alkenyl group as said R); and when n = 2 to 6, R¹ represents a n-valent C₂-C₂₀ organic group)
or by the following Formula (II): 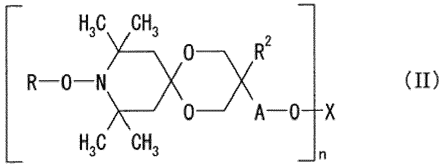 (wherein, R represents a C₁-C₃₀ alkyl group or hydroxyalkyl group, or a C₂-C₃₀ alkenyl group; R² represents a hydrogen atom, a C₁-C₂₂ alkyl group or a C₂-C₂₂ alkenyl group; A represents a single bond, a linear or branched C₁-C₁₂ alkylene group or an alkylene group having an ether bond; n represents an integer of 2 to 6; and X represents -C(=O)-, a linear or branched C₄-C₄₀ alkylene group having - C(=O)O- at terminal, a linear or branched C₄-C₄₀ alkylene group having -C(=O)O- at terminal and an ether bond in an intermediate position, a linear or branched C₄-C₄₀ alkylene group having a carbonate bond or a C₆-C₃₀ organic group having -O-C(=O)-in the number of 3 to 6 at terminal).

7. Use according to claim 6 wherein, in said Formula (I), R is a C₄-C₂₂ alkyl group, n is 2, and R¹ is a C₂-C₁₂ alkylene group.

8. Use according to any of claim 6 and claim 7 wherein, in said Formula (I), n is 1 and R¹ is a group represented by said Formula (III) (wherein, R is a C₁₀-C₂₂ alkyl group).

9. Use according to any of claims 6-8 wherein the composition further comprises metal salts of organic carboxylic acids, phenols and organic phosphates, zeolite compounds, hydro talcite compounds, β-diketone compounds, epoxy compounds, poly alcohols, phenyl based, phosphorus based and sulphur based antioxidents, ultra violet absorbers, hindered amine based light stabilizers and/or other inorganic metal compounds.

10. Use according to any of claims 6-9 wherein the composition is molded into an article for use in an automobile seat.

## Patentansprüche

1. Ein Verfahren für thermische Behandlung einer Harzzusammensetzung auf Vinylchloridbasis durch Pulvergießen, wobei die Harzzusammensetzung auf Vinylchloridbasis in Bezug auf 100 Masseteile eines Harzes auf Vinylchloridbasis (a) 0,001 bis 10 Masseteile von mindestens einer gehinderten Aminoverbindung und (b) 0,001 bis 10 Masseteile von mindestens einer aus der folgenden Gruppe ausgewählten Verbindungen, nämlich Metall-Perchlorate , Ammonium-Perchlorate, mit Perchlorsäure behandelte Hydrotalcite und mit Perchlorsäure behandelte Silicate, umfasst, wobei die genannte gehinderte Aminozusammensetzung durch die folgende Formel (I) repräsentiert wird: 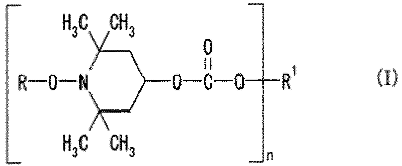 (wobei R eine C₁-C₃₀-Alkylgruppe oder -Hydroxyalkylgruppe oder eine C₂-C₃₀-Alkenylgruppe repräsentiert, n eine Ganzzahl von 1 bis 6 repräsentiert; wenn n = 1, R¹ eine C₁-C₂₂-Alkylgruppe, eine C₂-C₂₂-Alkenylgruppe oder eine durch die folgende Formel (III) repräsentierte Gruppe repräsentiert: 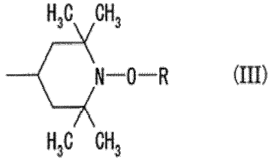 (wobei R dieselbe C₁-C₃₀-Alkylgruppe oder -Hydroxyalkylgruppe oder C₂-C₃₀-Alkenylgruppe wie das genannte R repräsentiert); und wenn n = 2 bis 6, R¹ eine n-valente organische C₂-C₂₀-Gruppe repräsentiert)
oder durch die folgende Formel (II) repräsentiert wird: 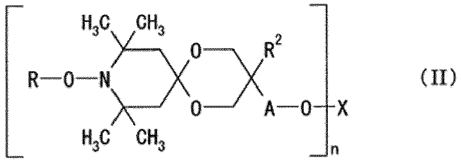 (wobei R eine C₁-C₃₀-Alkylgruppe oder -Hydroxyalkylgruppe oder C₂-C₃₀-Alkenylgruppe repräsentiert; R² ein Wasserstoffatom, eine C₁-C₂₂-Alkylgruppe oder eine C₂-C₂₂-Alkenylgruppe repräsentiert; A eine einfache Bindung, eine lineare oder verzweigte C₁-C₁₂-Alkylengruppe oder eine Alkylengruppe mit einer Etherbindung repräsentiert; n eine Ganzzahl von 2 bis 6 repräsentiert und X -C(=O)-, eine lineare oder verzweigte C₄-C₄₀-Alkylengruppe mit-C(=O)O- in der Endposition, eine lineare oder verzweigte C₄-C₄₀-Alkylengruppe mit -C(=O)O-in der Endposition und einer Ether-Bindung in einer mittleren Position, eine lineare oder verzweigte C₄-C₄₀-Alkylengruppe mit einer Carbonat-Bindung oder einer organischen C₆-C₃₀-Gruppe mit -O-C(=O)- in Nummer 3 bis 6 in der Endposition repräsentiert).

2. Das Verfahren entsprechend Anspruch 1, wobei in der genannten Formel (I) R eine C₄-C₂₂-Alkylgruppe ist, n 2 ist und R¹ eine C₂-C₁₂-Alkylengruppe ist.

3. Das Verfahren entsprechend einem der vorhergehenden Ansprüche, wobei in der genannten Formel (I) n 1 ist und R¹ eine Gruppe ist, die durch die genannte Formel (III) repräsentiert wird (wobei R eine C₁₀-C₂₂-Alkylgruppe ist).

4. Das Verfahren entsprechend einem der vorhergehenden Ansprüche, wobei die Zusammenfassung zudem Metallsalze organischer Carbonsäuren, Phenole und organische Phosphate, Zeolithverbindungen, Hydrotalcitverbindungen, β-Diketonverbindungen, Epoxyverbindungen, Polyalkohole, Antioxidantien auf Phenyl-, Phosphor- und Schwefelbasis, Ultraviolett-Absorber, Lichtstabilisatoren auf gehinderter Aminbasis und/oder anorganische Metallverbindungen umfasst.

5. Das Verfahren entsprechend einem der vorhergehenden Ansprüche, wobei die Zusammensetzung in einen Artikel zwecks Verwendung in einem Kraftfahrzeugsitz geformt wird.

6. Die Verwendung von mindestens einer gehinderten Aminozusammensetzung und mindestens einer aus der Gruppe bestehend aus Metall-Perchloraten , Ammonium-Perchloraten, mit Perchlorsäure behandelten Hydrotalciten und mit Perchlorsäure behandelten Silicaten ausgewählten Verbindung in einer Vinylchloridharzverbindung in einem Pulvergießverfahren zur Verbesserung thermischer Stabilität, Färbbarkeit und Verarbeitbarkeit, wobei die genannte gehinderte Aminozusammensetzung durch die folgende Formel (I) repräsentiert wird: 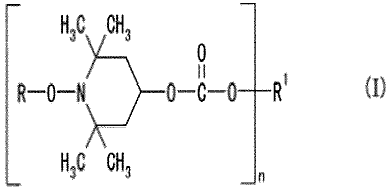 (wobei R eine C₁-C₃₀-Alkylgruppe oder -Hydroxyalkylgruppe oder eine C₂-C₃₀-Alkenylgruppe repräsentiert, n eine Ganzzahl von 1 bis 6 repräsentiert; wenn n = 1, R¹ eine C₁-C₂₂-Alkylgruppe, eine C₂-C₂₂-Alkenylgruppe oder eine durch die folgende Formel (III) repräsentierte Gruppe repräsentiert: 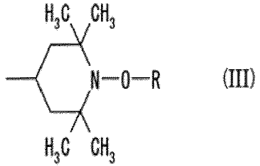 (wobei R dieselbe C₁-C₃₀-Alkylgruppe oder -Hydroxyalkylgruppe oder C₂-C₃₀-Alkenylgruppe wie das genannte R repräsentiert); und wenn n = 2 bis 6, R¹ eine n-valente organische C₂-C₂₀-Gruppe repräsentiert)
oder durch die folgende Formel (II) repräsentiert wird: 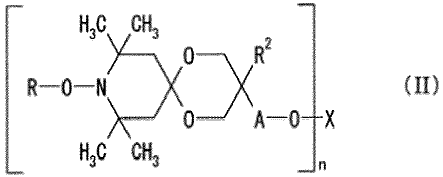 (wobei R eine C₁-C₃₀-Alkylgruppe oder -Hydroxyalkylgruppe oder C₂-C₃₀-Alkenylgruppe repräsentiert; R² ein Wasserstoffatom, eine C₁-C₂₂-Alkylgruppe oder eine C₂-C₂₂-Alkenylgruppe repräsentiert; A eine einfache Bindung, eine lineare oder verzweigte C₁-C₁₂-Alkylengruppe oder eine Alkylengruppe mit einer Etherbindung repräsentiert; n eine Ganzzahl von 2 bis 6 repräsentiert und X -C(=O)-, eine lineare oder verzweigte C₄-C₄₀-Alkylengruppe mit-C(=O)O- in der Endposition, eine lineare oder verzweigte C₄-C₄₀-Alkylengruppe mit -C(=O)O-in der Endposition und einer Ether-Bindung in einer mittleren Position, eine lineare oder verzweigte C₄-C₄₀-Alkylengruppe mit einer Carbonat-Bindung oder einer organischen C₆-C₃₀-Gruppe mit -O-C(=O)- in Nummer 3 bis 6 in der Endposition repräsentiert).

7. Verwendung entsprechend Anspruch 6, wobei in der genannten Formel (I) R eine C₄-C₂₂-Alkylgruppe ist, n 2 ist und R¹ eine C₂-C₁₂-Alkylengruppe ist.

8. Verwendung entsprechend Anspruch 6 oder Anspruch 7, wobei in der genannten Formel (I) n 1 ist und R¹ eine Gruppe ist, die durch die genannte Formel (III) repräsentiert wird (wobei R eine C₁₀-C₂₂-Alkylgruppe ist).

9. Verwendung entsprechend einem der Ansprüche 6-8, wobei die Zusammenfassung zudem Metallsalze organischer Carbonsäuren, Phenole und organische Phosphate, Zeolithverbindungen, Hydrotalcitverbindungen, β-Diketonverbindungen, Epoxyverbindungen, Polyalkohole, Antioxidantien auf Phenyl-, Phosphor- und Schwefelbasis, Ultraviolett-Absorber, Lichtstabilisatoren auf gehinderter Aminbasis und/oder anorganische Metallverbindungen umfasst.

10. Verwendung entsprechend einem der Ansprüche 6-9, wobei die Zusammensetzung in einen Artikel zwecks Verwendung in einem Kraftfahrzeugsitz geformt wird.

## Revendications

1. Procédé de traitement thermique d'une composition de résine à base de chlorure de vinyle par moulage de poudre, la composition de résine à base de chlorure de vinyle comprenant, par rapport à 100 parties en masse de résine à base de chlorure de vinyle, (a) 0,001 à 10 parties en masse d'au moins un composé d'amine encombrée et (b) 0,001 à 10 parties en poids d'au moins un élément sélectionné dans le groupe constitué de perchlorates de métal, de perchlorates d'ammonium, d'hydrotalcites traités par l'acide perchlorique et de silicates traités par l'acide perchlorique, ledit composé d'amine encombrée étant représenté par la formule (I) suivante : 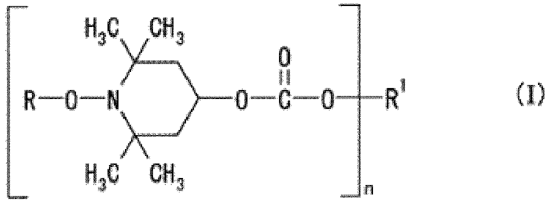 (dans laquelle, R représente un groupe alkyle ou un groupe hydroxyalkyle en C₁ à C₃₀, ou un groupe alcényle en C₂ à C₃₀ ; n représente un nombre entier valant de 1 à 6 ; lorsque n = 1, R¹ représente un groupe alkyle en C₁ à C₂₂, un groupe alcényle en C₂ à C₂₂ ou un groupe représenté par la formule (III) suivante : 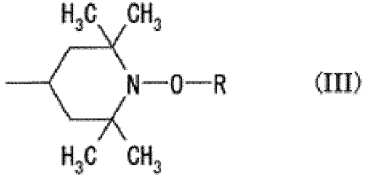 (dans laquelle, R représente le même groupe alkyle ou hydroxyalkyle en C₁ à C₃₀ ou le même groupe alcényle en C₂ à C₃₀ que ledit R ; et lorsque n = 2 à 6, R¹ représente un groupe organique en C₂ à C₂₀ de valence n) 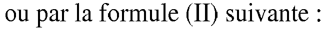 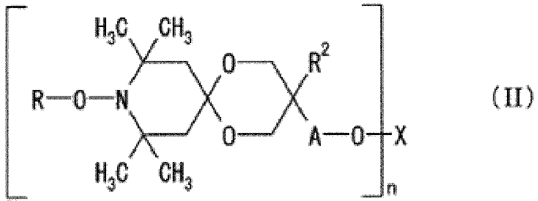 dans laquelle, R représente un groupe alkyle ou un groupe hydroxyalkyle en C₁ à C₃₀, ou un groupe alcényle en C₂ à C₃₀ ; R² représente un atome d'hydrogène, un groupe alkyle en C₁ à C₂₂ ou un groupe alcényle en C₂ à C₂₂ ; A représente une liaison simple, un groupe alcylène en C₁ à C₁₂ linéaire ou ramifié ou un groupe alcylène ayant une liaison éther ; n représente un nombre entier valant de 2 à 6 ; et X représente un groupe -C(=O)-, un groupe alcylène en C₄ à C₄₀ linéaire ou ramifié ayant un groupe -C(=O)O- à une extrémité terminale, un groupe alcylène en C₄ à C₄₀ linéaire ou ramifié ayant le groupe -C(=O)O- à une extrémité terminale et une liaison éther à une position intermédiaire, un groupe alcylène en C₄ à C₄₀ linéaire ou ramifié ayant une liaison carbonate ou un groupe organique en C₆ à C₃₀ ayant un groupe -O-C(=O)- dans le nombre valant de 3 à 6 à une extrémité terminale).

2. Procédé selon la revendication 1, dans lequel, dans ladite formule (I), R représente un groupe alkyle en C₄ à C₂₂, n vaut 2, et R¹ représente un groupe alcylène en C₂ à C₁₂.

3. Procédé selon l'une quelconque des revendications précédentes, dans lequel, dans ladite formule (I), n vaut 1 et R¹ représente un groupe représenté par ladite formule (III) (dans laquelle, R représente un groupe alkyle en C₁₀ à C₂₂).

4. Procédé selon l'une quelconque des revendications précédentes, dans lequel la composition comprend en outre des sels de métaux d'acides carboxyliques organiques, des phénols et des phosphates organiques, des composés de zéolite, des composés d'hydrotalcite, des composés de bêta-dicétone, des composés d'époxy, des polyalcools, des antioxydants à base de phényle, à base de phosphore et à base de soufre, des absorbeurs du rayonnement ultra-violet, des stabilisants à la lumière à base d'amine encombrée et/ou d'autres composés métalliques inorganiques.

5. Procédé selon l'une quelconque des revendications précédentes, dans lequel la composition est moulée en un article destiné à une utilisation dans un siège pour automobiles.

6. Utilisation d'au moins un composé d'amine encombrée et d'au moins un élément sélectionné dans le groupe constitué de perchlorates de métaux, de perchlorates d'ammonium, d'hydrotalcites traités à l'acide perchlorique et de silicates traités à l'acide perchlorique, dans une composition de résine de chlorure de vinyle, dans le cadre d'un procédé de moulage de poudre en vue d'améliorer la stabilité thermique, l'aptitude à la coloration et la possibilité de traitement, le composé d'amine encombrée étant représenté par la formule (I) suivante : 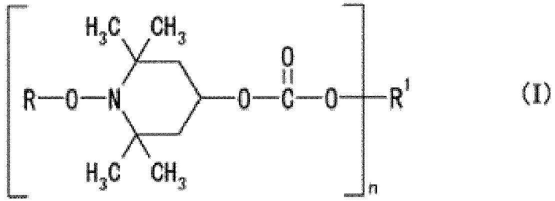 (dans laquelle, R représente un groupe alkyle ou un groupe hydroxyalkyle en C₁ à C₃₀, ou un groupe alcényle en C₂ à C₃₀ ; n représente un nombre entier valant de 1 à 6 ; lorsque n = 1, R¹ représente un groupe alkyle en C₁ à C₂₂, un groupe alcényle en C₂ à C₂₂ ou un groupe représenté par la formule (III) suivante : 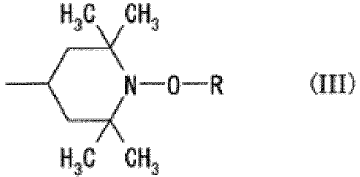 (dans laquelle, R représente le même groupe alkyle ou groupe hydroalkyle en C₁ à C₃₀ ou le même groupe alcényle en C₂ à C₃₀ que ledit R) ; et lorsque n = 2 à 6, R¹ représente un groupe organique en C₂ à C₂₀ de valence n)
ou par la formule (II) suivante : 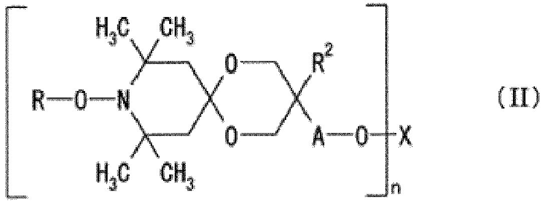 (dans laquelle, R représente un groupe alkyle ou un groupe hydroxyalkyle en C₁ à C₃₀, ou un groupe alcényle en C₂ à C₃₀ ; R² représente un atome d'hydrogène, un groupe alkyle en C₁ à C₂₂ ou un groupe alcényle en C₂ à C₂₂ ; A représente une liaison simple, un groupe alcylène en C₁ à C₁₂ linéaire ou ramifié ou un groupe alcylène ayant une liaison éther ; n représente un nombre entier valant de 2 à 6 ; et X représente un groupe -C(=O)-, un groupe alcylène en C₄ à C₄₀ linéaire ou ramifié ayant le groupe -C(=O)- à une extrémité terminale, un groupe alcylène en C₄ à C₄₀ linéaire ou ramifié ayant un groupe -C(=O)O- à une extrémité terminale et une liaison éther à une position intermédiaire, un groupe alcylène en C₄ à C₄₀ linéaire ou ramifié ayant une liaison carbonate ou un groupe organique en C₆ à C₃₀ ayant le groupe -O-C(=O)- dans le nombre valant de 3 à 6 à l'extrémité terminale.

7. Utilisation selon la revendication 6 dans laquelle, dans ladite formule (I), R représente un groupe alkyle en C₄ à C₂₂, n vaut 2 et R¹ représente un groupe alcylène en C₂ à C₁₂.

8. Utilisation selon l'une quelconque de la revendication 6 et de la revendication 7, dans laquelle, dans ladite formule (I), n vaut 1 et R¹ représente un groupe représenté par ladite formule (III) (dans laquelle R représente un groupe alkyle en C₁₀ à C₂₂).

9. Utilisation selon l'une quelconque des revendications 6 à 8 dans laquelle la composition comprend en outre des sels de métaux d'acides carboxyliques organiques, des phénols et des phosphates organiques, des composés de zéolite, des composés d'hydrotalcite, des composés de bêta-dicétone, des composés d' époxy, des polyalcools, des antioxydants à base de phényle, à base de phosphore et à base de soufre, des absorbeurs du rayonnement ultra-violet, des stabilisants à la lumière à base d'amine encombrée et/ou des composés métalliques inorganiques.

10. Utilisation selon l'une quelconque des revendications 6 à 9 dans laquelle la composition est moulée en un article destiné à une utilisation dans un siège d'automobile.
